# EUROPEAN PATENT SPECIFICATION

(11) **EP 3 545 068 B1**
(45) Date of publication and mention of the grant of the patent: **13.11.2024**
(21) Application number: 17808411.7
(22) Date of filing: 28.11.2017
(51) Int. Cl.: C12C 7/047

(54) **METHOD OF PREPARING CEREAL EXTRACT**
VERFAHREN ZUR HERSTELLUNG EINES GETREIDEEXTRAKTS
PROCÉDÉ DE PRÉPARATION D'EXTRAIT DE CÉRÉALES

(30) Priority: 28.11.2016 EP 16200902
(43) Date of publication of application: 02.10.2019
(73) Proprietor: Société des Produits Nestlé S.A., 1800 Vevey (CH)
(72) Inventor: HEMPEN, Ansgar, 67580 Hamm am Rhein (DE); ULMER, Helge, 78224 Singen (DE); HAAS, Stefan, 1417 Essertines-sur-Yverdon (CH)
(74) Representative: Elleby, Gudrun
(86) International application number: PCT/EP2017/080705
(87) International publication number: WO 2018/096180

(56) References cited:
- EP-B1- 2 222 831
- WO-A1-2015/032850
- US-A- 3 712 820
- US-A1- 2012 090 413
- US-A1- 2015 118 355
- DECLAN L. GOODE ET AL: "Mashing Studies with Unmalted Sorghum and Malted Barley", JOURNAL OF THE INSTITUTE OF BREWING, vol. 108, no. 4, 9 October 2002 (2002-10-09), pages 465 - 473, XP055186624, ISSN: 0046-9750, DOI: 10.1002/j.2050-0416.2002.tb00577.x

## Description

### FIELD OF THE INVENTION

The present invention relates to a method of mashing raw cereals to make wort.

### BACKGROUND OF THE INVENTION

Brewing processes to produce malt extract are well known in the art.

Malt is produced from cereal grains, such as barley, by controlled germination. Enzymes are generated by the grain during germination. These enzymes are able to degrade high molecular weight substances such as starch, protein and fat into low molecular substances such as sugars, mainly comprising glucose, fructose, maltose and maltotriose, amino acids and fatty acids. Cell wall components that cover the starch granules are hydrolysed as well, which eases the sugar extraction during the mashing process.

Controlled germination is performed by adding water to cereal grains, to reach about 60% total solid. Controlled germination also involves a controlled aeration with conditioned air. For instance, raw barley may be found with a water content of 14%. During malting, the moisture content is raised up to 42% to 46% (steeping). Germination takes place at 15°C to 19°C with controlled aeration over a few days.

Germination is interrupted by "kilning". Kilning is a step of drying the germinated cereal to achieve a dry matter content of above 95%. For instance, germinated barley is dried to a dry matter content of above 95% at a temperature of approximately 70°C to keep the level of enzymes active. Malted barley, or "malt", can then be stored.

The malt is crushed to a "grist". In addition to the crushed malt, the grist may also contain one or more adjuncts such as starches of tapioca, cassava, maize or rice. The grist is mixed with water to form a "mash". Mashing is the process of converting starch of the mash into fermentable and un-fermentable sugars. The mashing process is normally conducted over a period of time at various temperatures in order to activate the endogenous enzymes responsible for the degradation of proteins and carbohydrates. These endogenous enzymes include alpha-amylase, beta-amylase, beta-glucanase and xylanase, which degrade starch and the cell wall materials.

Hence, the production of malt is a very energy- and water-intensive process. These steps are reflected in higher costs of malted cereal compared to raw cereal grains, such as barley.

Exogenous enzymes may be added during the mashing process to speed up the reactions and enable better control over the brewing process. Towards the end of mashing, the temperature may be raised to 75-80°C. After the mashing, the resulting liquid is strained from the grains in a filtration step such as mash filtration or "lautering". The liquid resulting from the filtration step is known as the "wort". The wort may then be concentrated and/or dried to form malt extract paste or powder.

WO 2013/167573 describes a method of preparing a wort comprising a high level of free amino acids. This method comprises the steps of: (a) mashing a composition comprising barley in the presence of exogenous enzymes comprising an alpha-amylase, a beta-glucanase, a pullulanase, a xylanase, and a lipase; and (b) adding to said composition during mashing or after completion of mashing at least two different exogenous proteases, one protease with endoprotease activity, and the other with exopeptidase activity. This process allows for a high level of free amino-acids in the wort, which is required for optimal fermentation by yeasts in subsequent steps of the brewing process.

US 2015/118355 A1 describes a process for preparing a wort comprising a high level of free amino acids employing various enzymes, including exogenous proteases, such as an endoprotease and an exoprotease. In particular, this process is useful for preparing yeast-fermented beverages, because yeasts require the presence of nutritional compounds including sugar and nitrogen. Sources of nitrogen include amino acids. According to this document, it is interesting to increase the level of free amino acids in wort because this results in significantly improved yeast growth.

It is also known to apply enzymes to non-malted cereal(s). WO 2009/074650 or EP 2222831 B1 describes a process for the production of a brewer's wort. This process comprises: (a) obtaining a mash by mashing a grist at a temperature at which exogenous (added) enzymes and the endogenous beta-amylase are active; (b) contacting the mash with exogenous enzymes comprising: an alpha-amylase activity, a pullulanase activity, a proteolytic activity, and a beta-glucanase activity; and (c) mashing-off and filtering the mash to obtain the wort. The grist comprises at least 70 wt% non-malted cereal(s) comprising beta-amylase activity, and less than 30 wt% malted cereal(s).

EP 2499227 describes a method of mashing comprising providing a grist comprising malt and adjunct; and contacting the grist with a pullulanase, an alpha-amylase, and a maltogenic alpha amylase and/or a beta amylase to make a wort. An enzyme composition comprising a pullulanase, an alpha amylase and a maltogenic alpha amylase and/or a beta amylase and the use of these enzymes in brewing is disclosed.

EP 2346978 describes a process for producing a wort. This process comprises the steps of mixing a grist with water, adding a debranching enzyme, resting said mixture at 58-68°C., for a period of 10-40 minutes, resting said mixture at 72-80°C., for a period of 5-20 minutes, and separating the wort from solid components. The debranching enzyme has above 60% enzyme activity, at 64°C., for a period of 10 minutes, at pH 5.0.

WO 2015/032850 A1 relates to a process of reducing the viscosity in a brewing process which comprises the steps of (a) preparing a mash from malt and adjunct, and (b) adding an arabinofuranosidase GH43 to the mash. Reducing viscosity allows faster downstream filtration steps in the brewing process.

US 2012/0090413 A1 relates to a method for determining the filterability of beer.

In their review, Cinelli et al 2015 "A brief review on the emerging technology of ethanol product by cold hydrolysis of raw starch", Fuel 150 (2015) 721-9, the authors list several enzymatic mixes used as accessory enzymes.

However, commercially available enzyme cocktails designed for processing of raw barley in brewing industry do not completely fulfil the requirements of filterability and extract yield in malt extraction. In particular, it is desirable to be able to filter the wort quickly from the solid components of the mash. It is also desirable to be able to increase the extraction yield from the mash.

In addition, an objective of the processes described in the prior art is to increase the glucose yield as much as possible, because it directly impacts the alcohol yield. However, generating a high amount of simple sugars, such as glucose, may have a negative impact on the nutritional profile of the wort. Therefore, it is also desirable to increase the extraction yield without generating too much sugar, such as glucose, in order to improve the nutritional profile of the wort.

Hence, there is a persisting need in the art to provide a process for malting green barley leading to a reduced footprint, in particular reduced water and energy consumptions, with the elimination of the traditional malting process, and improved cost competitiveness of the extraction process, as well as an improved nutritional profile. The present invention relates to such a method and use of selected enzyme preparations.

### SUMMARY OF THE INVENTION

The inventors have found that a combination of the main malting enzymes: an alpha-amylase, a protease and a filtration aid enzyme, can result in improved production efficiencies and a shorter filtration time compared with prior art solutions which contain more enzymes and exhibit more enzymatic activities. In particular, the hydrolysed hemicelluloses are dissolved in the wort, but do not increase the total solid content significantly.

Accordingly in one aspect, the present invention provides a method of preparing a wort from cereals, comprising the steps of:
a) providing a grist comprising non-malted cereals;
b) preparing a mixture by contacting the grist with water and with an alpha-amylase, a protease and a filtration aid enzyme, wherein the filtration aid enzyme comprises a beta-glucanase and a hemi-cellulase, or a xylanase and a hemi-cellulase, or a beta-glucanase, a xylanase and a hemi-cellulase, to yield a mash after incubation;
c) incubating said mixture at 45-55°C for a period of 10-30 minutes;
d) incubating said mixture at 60-70°C for a period of 20-40 minutes;
e) incubating said mixture at 80-90°C for a period of 5-15 minutes;
f) filtering the mash to obtain a liquid wort; and
g) collecting the wort;
wherein the grist comprises more than 80 wt% of particles which pass through a 1.25 mm sieve and more than 50 wt% of particles which pass through a 0.85 mm sieve.

The invention relates to the use of a composition comprising an alpha-amylase, a protease and filtration aid enzyme for the production of cereal wort from non-malted cereal grains, where said filtration aid enzyme comprises at least one enzyme selected from a beta-glucanase, a xylanase, or a hemi-cellulase, or mixtures thereof, and where said filtration aid enzyme does not comprise nor exhibit a pullulanase activity.

### BRIEF DESCRIPTION OF THE DRAWINGS

Figure 1 shows the filtration volume as a function of time from mash prepared with non-malted barley hydrolyzed with a commercial enzyme mix, with or without additional protease, as further explained in Example 1.
Figure 2 shows the filtration volume of strong wort as a function of time from mash prepared with malted (curve A) and non-malted barley hydrolyzed (curves B-I) with several enzyme combinations, as further explained in Examples 1 and 2.
Figure 3 shows the filtration volume of thin wort as a function of time from mash prepared with malted (curve A) and non-malted barley hydrolyzed (curves B-I) with several enzyme combinations, as further explained in Examples 1 and 2.

### DETAILED DESCRIPTION OF THE INVENTION

As used in the specification, the words "comprise", "comprising" and the like are to be construed in an inclusive sense, that is to say, in the sense of "including, but not limited to", as opposed to an exclusive or exhaustive sense.

As used in the specification, the singular forms "a", "an", and "the" include plural referents unless the context clearly dictates otherwise.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

The present invention provides a method of preparing a cereal extract (a "wort") from cereal grains. "Cereal grain" refers to seeds of Poaceae, which contain starch. Cereal grains are used as dry raw material. Cereals include, but are not limited to, barley, wheat, maize, rice, oat and rye.

The method comprises a first step (step a) of providing a grist comprising non-malted cereals. "Non-malted cereals" refers to raw cereal grain, as harvested and dried. In a standard malting process, cereal grains undergo a germination step. Contrary to standard malting processes, the grains used in the method according to the present invention do not undergo a germination step. Non-malted cereals have not undergone a malting process. An advantage of using non-malted cereals is that they are usually less expensive than malted cereals. However, they require a stronger treatment in order to yield enough wort.

"Grist" refers to coarse-milled cereal grains. The grist is a dry product, meaning that the water it contains derives from the cereal grains and from the optional adjunct mentioned below. The water content of the grist is lower than 8%, such as between 0.5% and 6%, for instance about 5%. Optionally, the grist is dried to this moisture content using hot air

The inventors have found that the particle size distribution of the grist has an impact on the efficiency of the method according to the present invention. If the grist particles are too large, the mashing step will be too long and/or it may have a negative impact on the yield. The yield may be increased by improving the access of the enzymes to the starch grains. If the grist particles are too small, they may clog the filters used to collect the wort, which will increase the filtration time and also reduces the yield. Here, the yield is the ratio between the total solids in the wort and the total solids in the grist.

The particle size distribution of the grist is measured by sieving the grist with sieves having a mesh size of 1.25 mm, 0.85 mm, and 0.25 mm. Particles larger than about 1.25 mm remain in the 1.25 mm sieve. Particles smaller than about 1.25 mm pass through the 1.25 mm sieve, and so on with the smaller sieves.

In an embodiment, up to 80 wt%, preferably up to 70 wt%, of particles pass through a 0.25 mm sieve. In an embodiment, the grist comprises more than 80 wt% of particles which pass through a 1.25 mm sieve, more than 50 wt% of particles which pass through a 0.85 mm sieve and up to 80 wt% of particles which pass through a 0.25 mm sieve. In a preferred embodiment, the grist comprises more than 90 wt% of particles which pass through a 1.25 mm sieve and more than 60 wt% of particles which pass through a 0.85 mm sieve. More preferably, the grist comprises more than 95 wt% of particles which pass through a 1.25 mm sieve and more than 60 wt% of particles which pass through a 0.85 mm sieve. In a preferred embodiment, up to 70 wt% of particles pass through a 0.25 mm sieve. Hence, in a preferred embodiment, the grist comprises more than 95 wt% of particles which pass through a 1.25 mm sieve, more than 60 wt% of particles which pass through a 0.85 mm sieve and up to 70 wt% of particles which pass through a 0.25 mm sieve. In addition, the grist comprises less than 10 wt%, preferably less than 5 wt%, of particles which do not pass through a 1.25 mm sieve.

For instance in an embodiment, the grist comprises more than 80 wt% of particles which pass through a 1.25 mm sieve, more than 50 wt% of particles which pass through a 0.85 mm sieve, up to 80 wt% of particles which pass through a 0.25 mm sieve, and less than 10 wt% of particles which do not pass through a 1.25 mm sieve.

Preferably, the grist comprises more than 90 wt% of particles which pass through a 1.25 mm sieve, more than 60 wt% of particles which pass through a 0.85 mm sieve, up to 70°wt% of particles which pass through a 0.25 mm sieve, and less than 5 wt% of particles which do not pass through a 1.25 mm sieve.

Such a particle size distribution avoids clogging of the equipment, such as filters, during the processing of the coarse-milled cereal grains, while still ensuring sufficient size reduction to reach incubation times and filtration times that are not too long for industrial processes.

In embodiments, the grist comprises at least 25 wt% of non-malted cereals and up to 100 wt% of non-malted cereals. For instance, the grist comprises at least 50 wt% of non-malted cereals, preferably at least 60 wt% of non-malted cereals, such as at least 70 wt% of non-malted cereals, more preferably at least 80 wt% of non-malted cereals, and even more preferably at least 90 wt% of non-malted cereals. In an embodiment, the grist comprises 80 to 100 wt% of non-malted cereals, preferably 90 to 100 wt% of non-malted cereals, and more preferably 95 to 100 wt% of non-malted cereals. In an embodiment, the grist consists of non-malted cereals.

The grist may comprise a portion of malted cereals, such as less than 10 wt% of the grist. However, malted cereals increase the costs of production. Hence, in a preferred embodiment, the grist does not comprise malted cereals. "Malted cereal" refers to any cereal grain, in particular barley, which has germinated and has been optionally subsequently dried according to generally known malting processes.

In the grist, the cereals, preferably non-malted cereals, may include, but are not limited to, barley, wheat, maize, rice, oat and rye. For instance, the grist comprises mainly barley. Preferably, the grist comprises mainly non-malted barley.

The grist may comprise an adjunct. In the context of the invention, an "adjunct" is any additional source of starch other than the main cereal grain of the grist. The adjunct is not malted. The adjunct may be used as a solid or liquid ingredient, or a mix of a solid and a liquid ingredients, such as, but not limited to, wheat, barley, corn, starch, maltodextrin, molasses, roasted grains, rice, syrup and caramel. The adjunct may be used to fine tune the sugar profile of the wort or to provide specific flavour to the wort.

As the skilled person will understand, the various features of the grist may be combined freely between themselves.

"Malt extract" is a liquid or a powder obtained from the hydrolysis, depending on the context, of malted cereals, of non-malted cereals, optionally with an adjunct, or of mixture thereof. The hydrolysis step is followed by filtration and concentration of the hydrolysate, to obtain a liquid malt extract, and optionally drying, to form a paste or powder malt extract. According to the invention, malt extract is prepared from non-malted cereals or from non-malted cereals and an adjunct.

A subsequent step of the method (step b) comprises preparing a mixture by contacting the grist with water and with an alpha-amylase, a protease and a filtration aid enzyme, to yield a mash after incubation. The filtration aid enzyme comprises at least one enzyme selected from a beta-glucanase, a xylanase, or a hemi-cellulase, or mixtures thereof. In particular, the protease and filtration aid enzyme are useful to improve the yield. Indeed, starch granules are covered by a protein matrix and are combined with layers of carbohydrates. It is needed to hydrolyse the protein matrix and carbohydrate layers to reach the starch and to achieve a sufficient yield of hydrolysed starch in the mash and the wort. Also, the alpha-amylase, protease and filtration aid enzyme are used to hydrolyse components of the grist into soluble hydrolysates, such as amino-acids, oligopeptides, mono-, di- or oligosaccharides. In the context of the invention, "an" alpha-amylase, "a" protease and "a" filtration aid enzyme may comprise one or several enzymes which exhibit the required activity.

The water content of the mixture ranges from 50 to 90%, preferably from 60 to 60%. For instance, the water content of the mixture ranges from 65 to 80%, such as from 70 to 75%. On the one hand, if the water content is too low, this may lead to self-inhibition of some enzymes. Self-inhibition occurs when the concentration in hydrolysates exceeds an enzyme-dependent threshold. The lower the water content, the quicker the threshold may be reached. Data on the optimal conditions for the enzymatic treatment are usually provided by the enzyme suppliers. On the other hand, when the water content is too high, it increases the energy required to concentrate or evaporate the mash or the wort, once the hydrolysis has been performed. In its turn, this increases the water and energy footprints of the method.

The water content of the mixture comprises essentially the water added during step b. A minor portion of the water content derives from the water present in the grist. In order to reach the required water content of the mixture, it may be useful to measure the water content of the grist prior to adding water. Such methods are standard and known to the skilled person. In most cases, the water content of the grist can be disregarded, and the water content of the mixture corresponds mainly to the water added during step b.

An alpha-amylase (EC 3.2.1.1) is an enzyme allowing the endo-hydrolysis of (1→4)-α-D-glucosidic linkages in polysaccharides containing three or more (1→4)-α-linked D-glucose units. It is mainly a constituent of pancreatic juice and saliva, needed for the breakdown of long-chain carbohydrates such as starch, into smaller units. Here, alpha-amylase is used to hydrolyse gelatinized starch in order to decrease the viscosity of mash. Usually, alpha-amylases are most active at a temperature ranging between 60 and 70°C and at a pH of 5.6 to 6.0. In an embodiment, the alpha-amylase is dosed at 0.1% to 0.3% w/w of the grist, preferably 0.15% to 0.2% w/w of the grist. Termamyl from Novozymes, Gamalpha from AB Enzymes, and Hitempase from Kerry are examples of suitable alpha-amylases.

A protease is an enzyme allowing the hydrolysis of proteins from starch granules for improved access of the alpha-amylase to the starch granules. Usually, proteases are most active at a temperature ranging between 45 and 55°C, especially heat-resistant proteases, and at a pH of 5.0 to 5.4. In an embodiment, the protease is dosed at 0.1% to 0.3% w/w of the grist, preferably 0.15% to 0.25% w/w of the grist. Corolase from AB Enzymes, Bioprotease from Kerry, ProteAX from Amano, and Alcalase and Neutrase from Novozymes are examples of suitable proteases.

A filtration aid enzyme suitable for the invention is an enzyme used to hydrolyse dissolved and particulate matter in the mash, to further purify and clarify the wort. Usually, filtration aid enzymes are most active at a temperature ranging between 60 and 70°C. In an embodiment, the filtration aid enzymes are dosed overall at 0.1% - 0.2% w/w of the grist. The filtration aid enzyme hydrolyses gum-like compounds such as glucans (hemicelluloses). These compounds increase the viscosity of the wort and extend the filtration time. Examples of filtration aid enzymes include mannase, beta-glucanase, xylanase, and hemi-cellulase. The filtration aid enzyme comprises at least one enzyme selected from a beta-glucanase, a xylanase, or a hemi-cellulase, or mixtures thereof. Preferably, the filtration aid enzyme comprises a beta-glucanase, a xylanase and a hemi-cellulase. In addition, the filtration aid enzyme may comprise a mannase. For instance, the filtration aid enzyme comprises:
- a beta-glucanase and a xylanase, or
- a beta-glucanase and a hemi-cellulase, or
- a xylanase and a hemi-cellulase, or
- a beta-glucanase, a xylanase and a hemi-cellulase.

Optionally, the filtration aid enzymes further comprise a mannase together with:
- a beta-glucanase and a xylanase, or
- a beta-glucanase and a hemi-cellulase, or
- a xylanase and a hemi-cellulase, or
- a beta-glucanase, a xylanase and a hemi-cellulase.

In a preferred embodiment, the filtration aid enzyme is selected from the group consisting of a beta-glucanase, a xylanase, or a hemi-cellulase, or mixtures thereof, optionally with a mannase.

An endo-1,3(4)-beta-glucanase or beta-glucanase (EC 3.2.1.6) is an enzyme that hydrolyses the (1->3)- or (1->4)-linkages in beta-D-glucans when the glucose residue whose reducing group involved in the linkage to be hydrolysed is itself substituted at C-3. An endo-1,3-beta-xylanase or xylanase (EC 3.2.1.32) is an enzyme that propagates the random endo-hydrolysis of (1->3)-beta-D-glycosidic linkages in (1->3)-beta-D-xylans. A hemi-cellulase (EC 3.1.1.73) is an enzyme that hydrolyses feruloyl groups from hemicelluloses and releases ferulic acid, arabinoxylan and pectin. A beta-mannosidase or mannase (EC 3.2.1.25) is an enzyme that hydrolyses terminal, non-reducing beta-D-mannose residues in beta-D-mannosides.

For instance, Rohalase from AB Enzymes (mannase, beta-glucanase, xylanase, cellulase), Ultraflo from Novozymes (beta-glucanase [main activity], cellulase and xylanase), and Bioglucanase HAB from Kerry (beta-glucanase) are suitable filtration aid enzymes.

Preferably, the filtration aid enzyme does not comprise nor exhibit a pullulanase activity. A pullulanase (EC 3.2.1.142), or limit dextrinase, is an enzyme that hydrolyses the (1->6)-alpha-D-glucosidic linkages in the alpha- and beta-limit dextrins of amylopectin and glycogen, and in amylopectin and pullulan. A pullulanase is not required because as shown in the examples below, it does not improve the yield nor the filtration time. Any enzyme added to the mixture increases the production costs.

In addition, as mentioned above, pullulanase hydrolyses 1-6 linkages in amylopectin. The resulting products can then be further hydrolysed by amylases to low molecular weight sugars. Hence, this generates glucose and maltose, which increases the sugar content of the wort. Increasing the sugar content of the wort is not desired for nutritional reasons. When a pullulanase activity is avoided, the 1-6 linkages in amylopectin are not hydrolysed completely. As a result, longer water-soluble dextrins remain.

In a preferred embodiment, the alpha-amylase is dosed to 0.1% - 0.3% w/w of the grist, preferably 0.15% - 0.2% w/w of the grist, and/or the protease is dosed to 0.1% - 0.3% w/w of the grist, preferably 0.15% - 0.25% w/w of the grist, and/or the filtration aid enzyme is dosed to 0.1% - 0.2% w/w of the grist, preferably 0.15% - 0.2% w/w of the grist. For instance, the alpha-amylase is dosed to 0.1% - 0.3% w/w of the grist, the protease is dosed to 0.1% - 0.3% w/w of the grist, and the filtration aid enzyme is dosed to 0.1% - 0.2% w/w of the grist. Preferably, the alpha-amylase is dosed to 0.15% - 0.2% w/w of the grist, the protease is dosed to 0.15% - 0.25% w/w of the grist, and the filtration aid enzyme is dosed to 0.15% - 0.2% w/w of the grist.

As mentioned above, the optimal pH for proteases is in the range of 5.0 to 5.4, while the optimal pH for alpha-amylase and filtration aid enzymes is in the range of 5.6 to 6.0. Hence, it is possible either to perform successive incubation steps at the optimal pH for each enzyme, or to identify a compromise for the pH.

For instance, in an embodiment, enzymes are added to the mixture individually, either after the pH of the mixture has been brought to the optimal pH for the respective enzyme, or before bringing the pH of the mixture to the optimal pH of the respective enzyme. However, this increases the complexity of the method, it adds further water to the mixture, since each step may require a pH adjustment, and it increases risks in terms of hygiene.

Therefore, it is preferred to bring the pH of the mixture to a compromise pH where the yield is optimal, considering fast starch hydrolysis and dry press-cake (i.e.: the mash residue after filtration of the wort). Preferably, the pH of the mixture is brought to 5.6 to 5.8 before the incubation step.

The optimal working temperature for proteases is in the range of 45 and 55°C, while the optimal working temperature for alpha-amylase and filtration aid enzymes is in the range of 60 and 70°C. Therefore, as will be shown below, it was needed to devise an incubation diagram in order to reach an optimal mash and wort yield. The incubation comprises the steps of:
(i) incubating said mixture at 45-55°C for a period of 10-30 minutes;
(ii) incubating said mixture at 60-70°C for a period of 20-40 minutes;
(iii) incubating said mixture at 80-90°C for a period of 5-15 minutes.

Step (i) is performed at an optimal temperature for most proteases. Step (ii) is performed at an optimal temperature for alpha-amylase and filtration aid enzymes. Some proteases are inactivated in step (ii). Step (iii) is required to inactivate the remaining enzymes from the hydrolysed mixture (the "mash"). Incubation ends with step (iii). Preferably, incubation begins with step (i), continues with step (ii) and ends with step (iii). This three-step incubation diagram is designed to correspond to the temperatures where the optimal enzymatic activity of the different enzymes is reached.

"Mash" refers to hydrolysed grist, after incubation with enzymes. The mash has a water content between 50 wt% and 90 wt%. The mash contains a liquid fraction, called the "wort", and solid particles. After filtration of the mash, the solid particles are compressed into a "filter cake" or "press cake" to extract more wort. This is the "strong wort". In order to increase the extraction yield, water may be pumped through the filtration cake, resulting in the "thin wort". Preferably, hot water, such as water at 75 to 80°C, is used for extracting the thin wort.

Hence, following incubation, the method comprises a step of filtering the mash to obtain a liquid wort; and collecting the wort. Preferably, the method comprises a further step of pressing the filter cake, in order to collect more wort.

The full method can thus be summarised as follows: a method of preparing a wort from cereals, comprising the steps of:
a) providing a grist comprising non-malted cereals;
b) preparing a mixture by contacting the grist with water and with an alpha-amylase, a protease and a filtration aid enzyme, wherein the filtration aid enzyme comprises a beta-glucanase and a hemi-cellulase, or a xylanase and a hemi-cellulase, or a beta-glucanase, a xylanase and a hemi-cellulase, to yield a mash after incubation;
c) incubating said mixture at 45-55°C for a period of 10-30 minutes;
d) incubating said mixture at 60-70°C for a period of 20-40 minutes;
e) incubating said mixture at 80-90°C for a period of 5-15 minutes;
f) filtering the mash to obtain a liquid wort; and
g) collecting the wort;
wherein the grist comprises more than 80 wt% of particles which pass through a 1.25 mm sieve and more than 50 wt% of particles which pass through a 0.85 mm sieve.

The method may comprise a further step of concentrating the wort to a water content of 20% or below, preferably by evaporation. The method may also comprise a further step of drying the wort. Hence, the wort may be used as such, or concentrated, or dried, as an ingredient in the preparation of a malted beverage powder.

A "malted beverage powder" is any beverage powder containing malt extract, for example at least 15 weight-%. The wort prepared according to the present invention may be used as an ingredient in the preparation of a malted beverage powder, such as a cocoa malted beverage powder. A "cocoa malted beverage powder" is a malted beverage powder comprising cocoa.

The wort is not used in a fermentation process. Fermentation processes include fermentation with yeasts, such as brewer's yeast, to manufacture beverages such as beer. Fermentation processes convert glucose and other carbohydrates into alcohol.

The invention describes the use of an enzyme composition comprising an alpha-amylase, a protease and a filtration aid enzyme for the production of cereal wort from non-malted cereals, where said filtration aid enzyme comprises at least one enzyme selected from a beta-glucanase, a xylanase, or a hemi-cellulase, or mixtures thereof, and where said enzyme composition does not comprise nor exhibit a pullulanase activity. This has been described above. The non-malted cereal is selected from barley, wheat, maize, rice, oat and rye, and mixtures thereof, preferably barley.

Those skilled in the art will understand that they can freely combine all features of the present invention disclosed herein. Further, features described for different embodiments of the present invention may be combined.

### Example 1

Non-malted barley with 10% moisture content was milled using a hammer mill with a 4 mm screen then with a 2 mm screen milling step. The resulting grist comprises about 6.5 wt% of particles which do not pass through a 1.25 mm sieve, about 30 wt% of particles which pass through a 1.25 mm sieve and not through a 0.85 mm sieve, about 40 wt% of particles which pass through a 0.85 mm sieve and not through a 0.25 mm sieve, and about 23.5 wt% of particles which pass through a 0.25 mm sieve.

A mixture is prepared by weighing 0.666 kg of the milled raw barley and water into the mash vessel (THERMOMIX^{®}) to reach a total solids of 27.25% in water. The mixture of non-malted barley grist with water weighted 2.20 kg.

A reference mixture is also prepared with 0.631 kg milled malted barley grist (5% moisture), to reach a total solids of 27.25% in water. The mixture of malted barley grist with water also weighted 2.20 kg.

The pH of the mixtures was adjusted to 5.80 with sodium hydroxide to achieve equal experimental conditions. 4/5 of the mashing water was heated up to 60°C. 1/5 of ambient water is added to the barley achieving a mixture temperature of 50°C at the start of the incubation diagram.

A first commercial mix of enzymes (OndeaPro from Novozymes) were added to the grists (0.2 % w/w of the grist). Hydrolysis of the non-malted grist was carried out according to the incubation profile, with 20 min. at 52°C, then 30 min. at 72°C and then 10 min. at 82°C (total incubation of 60 min.). The reference incubation diagram of 49 min. at 62°C and 24 min. at 82°C was used (total incubation time of 73 min.) with the reference grist prepared with malted barley.

As the THERMOMIX^{®} has a heating rate of up to 2 K/min only, the remaining time of the plateaus for 20 min. at 52°C, 30 min. at 72°C and 10 min. at 82°C incubation diagram was held.

OndeaPro exhibits the following enzymatic activities: pullulanase (main), beta-glucanase, xylanase, endoprotease, alpha-amylase and lipase.

All enzymes were pre-weighed and dissolved in 30 g of water before adding to the grist and starting the incubation diagram. The enzyme dosage is always based on the grist weighed in, not on the total mash volume. After hydrolysis, 1.9 L mash was fed into a preheated (80°C) MEURA Laboratory Filter Bomb.

Initially, 1 L of wort (strong wort) was collected under filtration pressure of 0.4 bar for 10 minutes. Then 1 L of water at 75°C was added. The filter cake was put under precompression at 4.75 bar for 1 minute. Then 1 L of weak wort was collected under a filtration pressure of 0.6 bar for 10 minutes. The same filtration diagram was used in the subsequent examples.

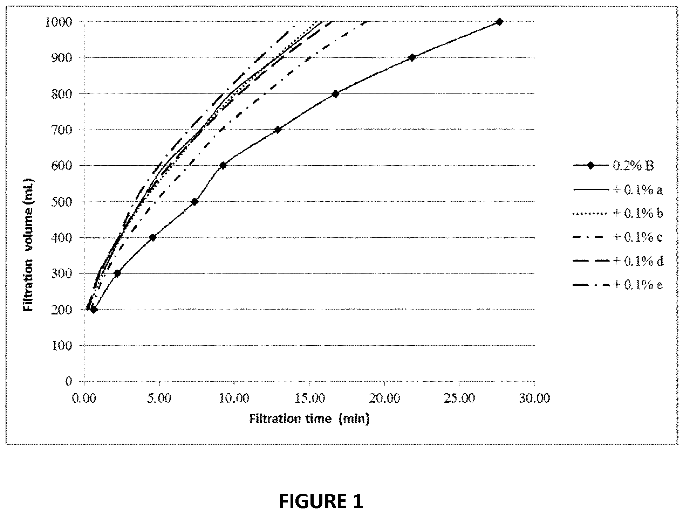

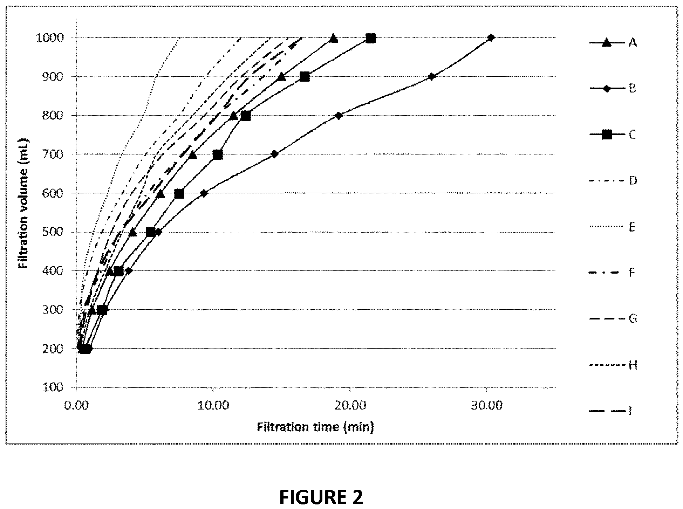

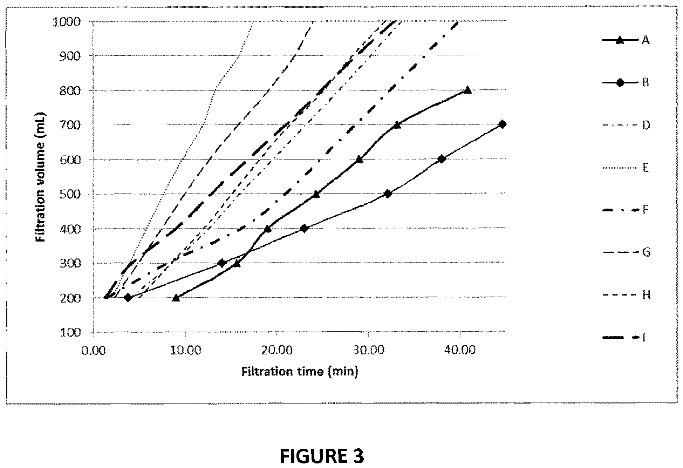

Additional trials were performed by adding a protease to the enzyme mix. Trial results are shown on Figure 1. Curve B represents the results obtained with OndeaPro alone. Curves a-e represent the results obtained with OndeaPro (same dosage) together with 0.1% w/w of a protease (a Alcalase 2.4L; b Alcalase BG; c Neutrease; d ProteAX; e Corolase). The malted barley reference can be compared on figures 2 and 3 as curve A. Figure 2 shows the filtration of the strong wort. Figure 3 shows the filtration of the thin wort.

This shows that adding protease reduces substantially the filtration time.

### Example 2

The same process was followed in Example 2 as in Example 1, except that Brewers Compass from DSM was used in this example instead of Novozyme's OndeaPro. Brewers Compass exhibits the following enzymatic activities: alpha-amylase, endo-1.4-beta-amylase and neutral endoprotease. The results are shown as curves C and D on figures 2 and 3. The remaining conditions were the same as in Example 1.

Alternatively, enzyme mix exhibiting the following enzymatic activities was used: alpha-amylase (Gamalpha, Termamyl, Hitempase SXTL), a protease (Corolase, Alcalase, Bioprotease, Neutrase) and filtration aid enzymes (Rohalase, Bioglucanase, Ultraflo L) comprising beta-glucanase, a xylanase, and/or a hemi-cellulase. The remaining conditions were the same as in Example 1. The enzymes are dosed as shown in the table below. The reference letters in the table correspond to the curves of Figures 2 and 3.

For instance, the enzyme mix may also comprises 0.2% Termamyl (Novozymes, alpha-amylase), 0.1% Bioglucanase HAB (Kerry, beta-glucanase), and 0.1% Corolase (AB Enzymes, heat-stable protease).

The strong wort and the thin wort can be combined before concentration and/or drying. Usually they are combined to improve the yield.

| | |
|---|---|
| Malted Barley Reference | A |
| 0.2% OndeaPro | B |
| 0.4% BrewersCompass | C |
| 0.4% BrewersCompass, 0.1% Alcalase BG, 0,05% Ultraflo L | D |
| 0.2% Gamalpha T400, 0.1% Rohalase Barley, 0.1% Corolase 2TS | E |
| 0.1% Gamalpha T400, 0.05% Rohalase Barley, 0,05% Corolase 2TS | F |
| 0.15% Gamalpha T400, 0.075% Rohalase Barley, 0.075% Alcalase | G |
| 0.15% Gamalpha T400, 0.075% Rohalase Barley, 0.1% Neutrase | H |
| 0.2% Hitempase SXTL, 0.1% HAB, 0.1% Bioprotease | I |

### Example 3

At the end of the mashing, an iodine test to measure completion of starch hydrolysis was performed with 0.1% iodine. The following analyses are performed on the wort: sugar profile (liquid chromatography), sugar content, protein content (Kjeldhal method), fat content (Soxhlet method), ashes, and total solids.

The analysis showed that by applying the method of the invention, a wort having the same sugar profile as a wort from malted barley could be obtained, that the filtration was faster than with standard malted barley or with OndeaPro or Brewers Compass enzymes, and that a similar yield could be reached.

## Claims

1. A method of preparing a wort from cereals, comprising the steps of:
a) providing a grist comprising non-malted cereals;
b) preparing a mixture by contacting the grist with water and with an alpha-amylase, a protease and a filtration aid enzyme, wherein the filtration aid enzyme comprises a beta-glucanase and a hemi-cellulase, or a xylanase and a hemi-cellulase, or a beta-glucanase, a xylanase and a hemi-cellulase, to yield a mash after incubation;
c) incubating said mixture at 45-55°C for a period of 10-30 minutes;
d) incubating said mixture at 60-70°C for a period of 20-40 minutes;
e) incubating said mixture at 80-90°C for a period of 5-15 minutes;
f) filtering the mash to obtain a liquid wort; and
g) collecting the wort;
wherein the grist comprises more than 80 wt% of particles which pass through a 1.25 mm sieve and more than 50 wt% of particles which pass through a 0.85 mm sieve.

2. The method according to claim 1, wherein the grist comprises up to 80 wt% of particles which pass through a 0.25 mm sieve.

3. The method according to claim 1 or 2, wherein incubation ends with step e).

4. The method according to any one of claims 1 to 3, wherein incubation starts with step c), continues with step d) and ends with step e).

5. The method according to any one of claims 1 to 4, wherein the mash has a water content between 50 wt% and 90 wt%.

6. The method according to any one of claims 1 to 5, which comprises a further step of pressing the filter cake.

7. The method according to any one of claims 1 to 6, which comprises a further step of concentrating the wort to a water content of 20%, preferably by evaporation.

8. The method according to any one of claims 1 to 7, which comprises a further step of drying the wort.

9. The method according to any one of claims 1 to 8, which does not comprise a fermentation step.

10. The method according to any one of claims 1 to 9, wherein said non-malted cereal is selected from barley, wheat, maize, rice, oat and rye, and mixtures thereof, preferably barley.

11. The method according to any one of claims 1 to 10, wherein:
- said alpha-amylase is dosed to 0.1% - 0.3% w/w of the grist, and/or
- said protease is dosed to 0.1% - 0.3% w/w of the grist, and/or
- said filtration aid enzyme is dosed to 0.1% - 0.2% w/w of the grist.

12. The method according to any one of claims 1 to 11, wherein the filtration aid enzyme does not exhibit a pullulanase activity.

## Patentansprüche

1. Verfahren zum Zubereiten einer Würze aus Getreide, umfassend die Schritte:
a) Bereitstellen eines Schrots, umfassend ungemälztes Getreide;
b) Zubereiten einer Mischung durch Kontaktieren des Schrots mit Wasser und mit einer Alpha-Amylase, einer Protease und einem Filterhilfsmittelenzym, wobei das Filterhilfsmittelenzym eine Beta-Glucanase und eine Hemicellulase oder eine Xylanase und eine Hemicellulase oder eine Beta-Glucanase, eine Xylanase und eine Hemicellulase umfasst, um nach einer Inkubation eine Maische hervorzubringen;
c) Inkubieren der Mischung bei 45-55 °C für einen Zeitraum von 10-30 Minuten;
d) Inkubieren der Mischung bei 60-70 °C für einen Zeitraum von 20-40 Minuten;
e) Inkubieren der Mischung bei 80-90 °C für einen Zeitraum von 5-15 Minuten;
f) Filtern der Maische, um eine flüssige Würze zu erhalten; und
g) Sammeln der Würze;
wobei der Schrot zu mehr als 80 Gew.-% Partikel, die durch ein 1,25-mm-Sieb hindurchgehen, und zu mehr als 50 Gew.-% Partikel, die durch ein 0,85-mm-Sieb hindurchgehen, umfasst.

2. Verfahren nach Anspruch 1, wobei der Schrot bis zu 80 Gew.-% Partikel, die durch ein 0,25-mm-Sieb hindurchgehen, umfasst.

3. Verfahren nach Anspruch 1 oder 2, wobei die Inkubation mit Schritt e) endet.

4. Verfahren nach einem der Ansprüche 1 bis 3, wobei die Inkubation mit Schritt c) beginnt, mit Schritt d) fortgesetzt wird und mit Schritt e) endet.

5. Verfahren nach einem der Ansprüche 1 bis 4, wobei die Maische einen Wassergehalt zu zwischen 50 Gew.-% und 90 Gew.-% aufweist.

6. Verfahren nach einem der Ansprüche 1 bis 5, das einen weiteren Schritt eines Pressens des Filterkuchens umfasst.

7. Verfahren nach einem der Ansprüche 1 bis 6, das einen weiteren Schritt eines Konzentrierens der Würze auf einen Wassergehalt von 20 %, vorzugsweise durch Verdampfen, umfasst.

8. Verfahren nach einem der Ansprüche 1 bis 7, das einen weiteren Schritt eines Trocknens der Würze umfasst.

9. Verfahren nach einem der Ansprüche 1 bis 8, das keinen Fermentationsschritt umfasst.

10. Verfahren nach einem der Ansprüche 1 bis 9, wobei das ungemälzte Getreide aus Gerste, Weizen, Mais, Reis, Hafer und Roggen und Mischungen davon, vorzugsweise Gerste, ausgewählt ist.

11. Verfahren nach einem der Ansprüche 1 bis 10, wobei:
- die Alpha-Amylase auf 0,1 Gew.-%-0,3 Gew.-% des Schrots dosiert wird, und/oder
- die Protease auf 0,1 Gew.-%-0,3 Gew.-% des Schrots dosiert wird, und/oder
- das Filterhilfsmittelenzym auf 0,1 Gew.-%-0,2 Gew.-% des Schrots dosiert wird.

12. Verfahren nach einem der Ansprüche 1 bis 11, wobei das Filterhilfsmittelenzym keine Pullulanaseaktivität vorweist.

## Revendications

1. Procédé de préparation d'un moût à partir de céréales, comprenant les étapes consistant à :
a) fournir une mouture comprenant des céréales non maltées ;
b) préparer un mélange en mettant en contact la mouture avec de l'eau et avec une alpha-amylase, une protéase et une enzyme d'aide à la filtration, dans lequel l'enzyme d'aide à la filtration comprend une bêta-glucanase et une hémi-cellulase, ou une xylanase et une hémi-cellulase, ou une bêta-glucanase, une xylanase et une hémi-cellulase, pour obtenir un brassin après incubation ;
c) incuber ledit mélange à 45 à 55 °C pendant une période de 10 à 30 minutes ;
d) incuber ledit mélange à 60 à 70 °C pendant une période de 20 à 40 minutes ;
e) incuber ledit mélange à 80 à 90 °C pendant une période de 5 à 15 minutes ;
f) filtrer le brassin pour obtenir un moût liquide ; et
g) recueillir le moût ;
dans lequel la mouture comprend plus de 80 % en poids de particules qui passent à travers un tamis de 1,25 mm et plus de 50 % en poids de particules qui passent à travers un tamis de 0,85 mm.

2. Procédé selon la revendication 1, dans lequel la mouture comprend jusqu'à 80 % en poids de particules qui passent à travers un tamis de 0,25 mm.

3. Procédé selon la revendication 1 ou 2, dans lequel l'incubation se termine à l'étape e).

4. Procédé selon l'une quelconque des revendications 1 à 3, dans lequel l'incubation commence à l'étape c), se poursuit à l'étape d) et se termine à l'étape e).

5. Procédé selon l'une quelconque des revendications 1 à 4, dans lequel le brassin a une teneur en eau comprise entre 50 % en poids et 90 % en poids.

6. Procédé selon l'une quelconque des revendications 1 à 5, qui comprend une étape supplémentaire consistant à presser le gâteau de filtration.

7. Procédé selon l'une quelconque des revendications 1 à 6, qui comprend une étape supplémentaire consistant à concentrer le moût à une teneur en eau de 20 %, de préférence par évaporation.

8. Procédé selon l'une quelconque des revendications 1 à 7, qui comprend une étape supplémentaire consistant à sécher le moût.

9. Procédé selon l'une quelconque des revendications 1 à 8, qui ne comprend pas d'étape de fermentation.

10. Procédé selon l'une quelconque des revendications 1 à 9, dans lequel ladite céréale non maltée est choisie parmi orge, blé, maïs, riz, avoine et seigle, et mélanges de ceux-ci, de préférence l'orge.

11. Procédé selon l'une quelconque des revendications 1 à 10, dans lequel :
- ladite alpha-amylase est dosée à 0,1 % à 0,3 % en poids/poids de la mouture, et/ou
- ladite protéase est dosée à 0,1 % à 0,3 % en poids/poids de la mouture, et/ou
- ladite enzyme d'aide à la filtration est dosée à 0,1 % à 0,2 % en poids/poids de la mouture.

12. Procédé selon l'une quelconque des revendications 1 à 11, dans lequel l'enzyme d'aide à la filtration ne présente pas d'activité pullulanase.
